# EUROPEAN PATENT APPLICATION

(11) **EP 1 975 206 A1**
(43) Date of publication of application: **01.10.2008**
(21) Application number: 07397007.1
(22) Date of filing: 30.03.2007
(51) Int. Cl.: C09C 1/02, C09C 1/36, C09C 1/42, C09C 3/06, C09C 3/10, D21H 17/67

(54) **Aqueous dispersions and method for the production thereof**

(71) Applicant: M-Real Oyj, 02100 Espoo (FI)
(72) Inventor: Sahlberg, teppo, 44120 Äänekoski (FI); Hemmes, Jan-Luiken, 45768 Bergisch Gladbach (DE)
(74) Representative: Sundman, Patrik Christoffer

(57) **Abstract**

A stable aqueous dispersion, comprising a latex, an inorganic pigment and a dispersing agent dispersed in water, wherein at least 50 wt-% of the latex is adsorbed onto the inorganic particles and at least 20 wt-% of the dispersing agent is adsorbed onto the latex. It can be produced by admixing the latex with an anionic dispersing agent having a charge density of at least 14.1 meq/g to form a modified latex, admixing the inorganic pigment with the modified latex in aqueous phase to form a pigment-latex slurry, and subjecting the pigment-latex slurry to intensive mixing to form a dispersion. The novel dispersions can be used in the paper and pulp industry and in the paint industry.

## Description

### Background of the Invention

### Field of the Invention

The present invention relates to aqueous dispersions. In particular, the present invention concerns stable aqueous dispersions, comprising a latex polymer, an inorganic pigment and a dispersing agent, all of which are dispersed in water. The present invention also relates to methods of producing such dispersions and to uses of the dispersions.

### Description of Related Art

Aqueous latex dispersions have a wide range of applications in industry. In particular, latex dispersions are employed for producing coating and surface treatment compositions for use, e.g., in the paper and pulp industry and in the paint industry. In these applications, typically some light scattering pigments are incorporated into the dispersion to form a coating colour or paint composition. Examples of suitable pigments include precipitated and ground calcium carbonate for coating colours and titanium dioxide for paint compositions.

The latex typically comprises colloidal polymer particles having particle sizes in the range from about 10 nm to 1 micrometre dispersed in an aqueous medium. For paper coating purposes the preferred particle size is in the range of 50 nm to 300 nm.

Conventionally, the latex is prepared by emulsion polymerization of appropriate monomers to produce an aqueous latex dispersion. Inorganic particles are then dispersed into the latex dispersion with the aid of a dispersing agent under vigorous stirring.

In the known latex dispersions, most of the latex polymer is present in the free state, i.e. the polymer is not bonded to the inorganic particles. Some of this free latex polymer will not work as a binder of the particles during coating but it will bind directly to the base web or it will filter through the web and accumulate in the circulating streams of the mill, and potentially even end up in effluents and waste water unless separated by, e.g., filtering. Consequently, there is a need for reducing the latex polymers lost during coating and surface treatment.

Further, in a coating colour, there is typically more than 10 parts of latex per 100 parts of pigments. The synthetic latex polymer and the dispersing agent are the most expensive component of the dispersions. Because the production of coated paper and cardboard products is increasing, a reduction in the amount of latex with already 20 % would give rise to savings on the order of several million euros even for single paper and board mill.

A method of treating inorganic particles with polymer particles for preparing latex dispersions is known in the art. FR Patent Application No. 2 736 922 discloses a process of encapsulating inorganic particles with polymer particles. According to the known art, latex is adsorbed on an inorganic particles in absence of a dispersant. The patent specification discloses the use of the aqueous dispersions formed by composite particles constituted by titanium dioxide encapsulated with latex. The proposed method of encapsulation is not successful, according to FR Patent Application No. 2 736 922, unless the organic particles are entirely coated with latex particles.

The technical solution proposed in the cited art is hampered by considerable disadvantages. Thus, it lacks economical feasibility. It is based on expensive components, such as nano particles (the size of the polymer particles is 20 to 40 nm), and it requires total encapsulation of the inorganic particles which clearly is an impractical target at industrial conditions.

### Summary of the Invention

It is an aim of the present invention to eliminate at least a part of the problems relating to the prior art and to provide a novel kind of stable latex-pigment dispersion while saving raw materials and without increasing manufacturing costs or weakening of the printablility of the substrate.

The present invention is based on the finding that an aqueous dispersion of composite particles can be produced by adsorbing modified latex particles onto inorganic particle in the absence of free dispersants. Therefore, according to the present invention, in a first step, a latex polymer is contacted with a polymeric dispersant, in particular an anionic dispersant, having high charge density and being capable of dispersing the latex. Such a polymer can be graft polymerized onto the surface of the latex particle to provide a modified latex particle. These modified latex polymer particles are then contacted with the pigment particles in aqueous medium whereby there is formed a latex/pigment hybrid or composite. At least a significant part of the latex becomes immobilized on the surface of the pigment and most of the latex does not remain in free state in the aqueous phase.

As a result, a non-settling dispersion is obtained which is stable over extended periods of time.

More specifically, the present invention is mainly characterized by what is stated in the characterizing part of claim 1.

The method according to the invention is characterized by what is stated in the characterizing part of claim 14.

Considerable advantages are obtained by the present invention. Thus, latex dispersions can be economically produced at present facilities and processes. The inorganic particles are not encapsulated with latex, as proposed in the art, but the amount of latex can be kept at a modest level to provide enough surface strength. When the dispersion is used for coating of fibrous webs, such as paper or cardboard webs, calendering of the coated web will soften the latex and glue the particles together to form a film.

By means of the invention, good coverage and surface strength are reached for coated paper or cardboard webs. By increasing the amount of dispersant, even further improvement of the surface strength can be attained. The optical properties of the webs are good; opacity is improved as is mostly also brightness.

In printing tests it has been found that latex-pigment composites slow down setting speed ("Set-off 0.06 s"), which means that it improves delta gloss. Immobilized latex also increases capillary adsorption (delta set-off).

Next, the invention will be examined in more detail with reference to the following detailed description and a number of working examples.

### Brief Description of the Drawings

Figure 1 is a schematic illustration of a modified latex particle, where anionic dispersing agents are attached on it (the figure is not drawn to scale);
Figure 2 is a similar schematic illustration of a latex-pigment composite (the figure is not drawn to scale); and
Figure 3 shows an atomic force microscope phase image (tapping mode 1.5 x 1.5 um) of a latex-pigment composite (Latex 2B), which has been freeze-dried over a glass plate.

### Description of Preferred Embodiments

Stable aqueous dispersions according to the invention comprise a polymeric latex, an inorganic pigment and a dispersing agent, optionally together with conventional dispersion auxiliary agents.

For the purpose of the present invention, the term "latex" stands for a water emulsion of small colloidal polymeric particles having an average particle size of about 10 to 1000 nm, e.g. about 40 to 500 nm. The "latex polymer" stands for the polymer of these colloidal particles and "polymer latex dispersion" stands for an aqueous dispersion of latex polymer, dispersant and inorganic particles.

As will appear from the above, in the present stable aqueous dispersions all components are dispersed in an aqueous medium such as water or mixtures of water and other solvents. The solids content of the latex dispersion, which is formed by the inorganic pigments and the latex polymer along with any auxiliary and additional components, can vary within broad ranges. Generally it is in the range of 10 to 90 % by weight, preferably about 15 to 85 % by weight. For coating colours, the solids content is in particular about 50 to 80 % by weight and for paint compositions it is 20 to 60 % by weight.

The present compositions are distinguished from conventional dispersions in the sense that a significant portion of the latex is adsorbed or attached to the inorganic particles.

Furthermore, at least a part of the dispersing agent is immobilized and adsorbed primarily to the latex.

According to a first embodiment, a considerably part, preferably at least 50 wt-% of the latex is adsorbed onto the inorganic particles, and at least 20 wt-% of the dispersing agent is adsorbed onto the latex.

In practice, the proportion of latex adsorbed to the inorganic particles is much higher. Typically, at least 70 wt-%, preferably at least 80 wt-%, of the latex is immobilized in this way. Of the dispersing agent at least 25 %, preferably at least 30 wt-%, is adsorbed onto the latex.

The latex is considered to be adsorbed to the inorganic particles once it is essentially no longer present in the aqueous phase in the form of free colloidal polymer particles. Thus, based on a determination on the latex polymer present in the aqueous phase, it is possible to measure the amount of latex polymer adsorbed to the inorganic particles.

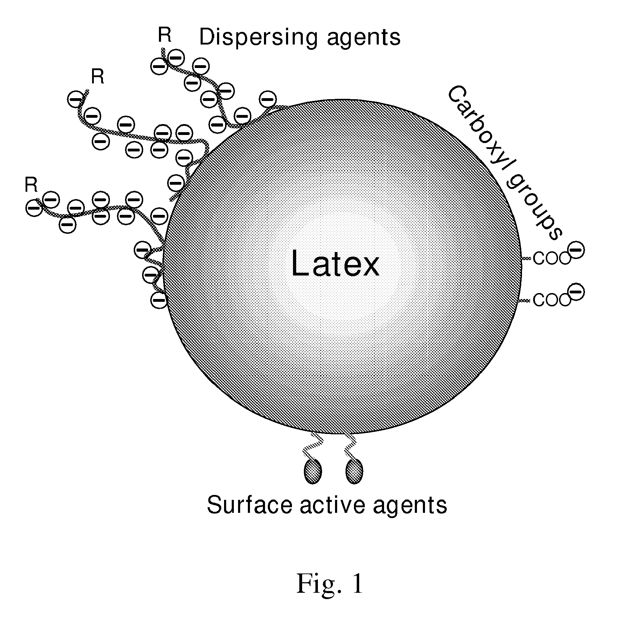

As will be discussed below in more detail, the latex is modified with the dispersing agent and the modified latex then binds to the inorganic/pigment particles. Thus, there is formed a composite or complex comprising inorganic particles, latex and dispersant (cf. Figure 1). In addition, in the slurry, there will often be some free dispersant (which can be of the same kind or different kind than the one adsorbed to the latex) and some free pigments and latex. However, a significant part of the dispersant is bonded to the latex, and the main part of the latex to the inorganic particles.

A typical composition of the dispersion comprises about 1 to 25 parts by weight, preferably about 2 to 20 parts by weight, of latex and dispersing agent per 100 parts by weight of the inorganic particles. According to a particularly preferred embodiment, the dispersion contains 1 to 10 parts, or even 2 to 8 parts, of latex per 100 parts by weight of the inorganic particles. These compositions will provide for a significant reduction of the latex consumption compared to conventional dispersions.

The dispersing agent comprises a component capable of being bonded to the latex particles. Preferably, the dispersing agent comprises a polymer which can be grafted onto said particles, in particular on the surface of them. A suitable type of polymer is an anionic dispersing agent. Preferably, the anionic dispersing agent has a charge density of at least 14.1 meq/g, based on a polymeric structure formed by acrylic acid monomers optionally copolymerized or grafted with monomers having several (in practice 2 or 3) acid groups. In particular, an acrylic acid based polymer preferably has a charge density of at least 14.5 meq/g, in particular at least 15.8 meq/g. Typically, the maximum charge density of such a (co)polymer is about 17.5 meq/g, although this is no absolute limit.

For other anionic dispersing agents, the minimum charge density will vary depending on the molecular weight of the monomers building up the polymeric chain of the dispersing agent and forming the grafted branches, if any, thereof. Generally, there should be at least one acid group per monomeric unit of the polymeric chain, preferably there is more than one acid group in each second monomeric unit, typically the number of acid groups is about 0.6 to 2.5 per monomeric unic.

"Monomeric units" are used synonymously with "repeating units" designating the building blocks of the polymeric chain and any grafted branches.

Furthermore, it is possible to modify the dispersing agent with a grafted side chain, such as a graft derived from a poly(alkylene oxide) chain or branch or a similar uncharged side chain (segment) which increases the affinity of the modified latex and, in practice, adsorption to the pigment. A particularly suitable example is formed by poly(lower alkylene oxides), such as poly(ethylene oxide), poly(propylene oxide) and poly(butylene oxide), each of which can optionally carry substituents on the alkylene chains. In case of a grafted side chain improving affinity, a charge density smaller than the one indicated above is sufficient. In practice, there can be about 1, preferably about 5 to 50, grafted non-charged side chains per 100 monomers of the monomeric unit of the polymeric chain.

Generally, it is require that the dispersing agent is water-soluble although it should exhibit some degree of hydrofobicity.

The anionic dispersing agent suitable for use is preferably a polymer which, upon contact with a radical initiator, is capable of forming a radical. Based on such a radical function, the polymer will bond to the latex and be grafted thereupon.

The anionic polymer can contain monomeric units with any acid groups, preferably however carboxylic or sulphonic acid groups. The acidic monomers may have generally one to three carboxylic or sulphonic acid groups. Typical monocarboxylic acid monomers are acrylic and metacrylic acids or similar monomers having the general formula H₂C=C(R¹)-COOR², wherein R¹ stands for a C₁₋₆ alkyl and R² stands for alkyl, in particular C₁₋₆ alkyl, or an aryl, and the dicarboxylic acid monomers are represented by maleic acid, succinic acid, glutaric acid, adipinic acid and phtalic acid. Generally the dicarboxylic acid can be represented by the formula HOOC-R³-COOH, wherein R³ stands for a bivalent hydrocarbyl group, derived from linear and branched alkylene groups, alkenylene groups and alkynylene groups, and bivalent alicyclic groups (polycyclic groups) and bivalent aromatic groups. Naturally, the corresponding anhydrides are also included.

It is possible to use dispersing agents comprising mixtures of monomeric acid groups. By mixing various monomers, the charge density can be set at a predetermined level. Di- and tricarboxylic acid groups will impart a higher charge density to a polymer primarily comprising monoacid groups. Thus, to mention one example related to a acrylic acid based polymer, the charge density of pure acrylic acid polymer is 14.1 meq/g. Such a dispersing agent is typically employed in the form of an alkali metal salt, such as sodium polyacrylate.

Higher charge densities in an acrylic acid polymer can then be obtained by incorporating units of dicarboxylic acids, such as maleic acid. At an equal weight ratio (50:50, molar ratio 62:38) of acrylic acid and maleic acid monomers the charge density can be set at about 16 meq/g (more precisely about 15.8 meq/g). Thus, according to one preferred embodiment, the dispersing agent is a polymeric compound having acid groups derived from acrylic acid and maleic acid.

Other anionic dispersing agents will have similar charge densities, although the numeric values will be dependent on the molecular weights of the monomers.

According to a preferred embodiment, at least 60 mole-%, preferably at least 90 mole-%, in particular up to 100 mole-%, of the monomers of the dispersant polymer grafted to the latex comprise acid units. These are either carboxylic or sulphonic groups.

In the polymeric dispersing agent, the acid groups are present as free acids or in the form of the corresponding salts. It should be pointed out that the charge densities are calculated from the anionic dispersant having all acid groups in fully dissociated state.

For radical initiation before grafting, various chemical and physical initiators can be used. Typical chemical initiators include oxidizing agent capable of forming a radical on the polymer chain, e.g. by oxidation of hydroxylic or carboxylic or sulphonic groups or of double bonds. The chemical initiator is typically a free radical forming substance, such as hydrogen peroxide, Fenton reagent, organic peroxidase, potassium permanganate, ozone and chlorine dioxide. Examples of suitable salts are inorganic transition metal salts, specifically salts of sulphuric acid, nitric acid and hydrochloric acid. Ferric chloride is an example of a suitable salt. Strong chemical oxidants such as alkali metal and ammonium persulphates and organic and inorganic peroxides can also be used.

The molecular weight (M_{w}) of the polymeric dispersing agent is generally about 1,000 to 150,000 g/mol, typically about 10,000 to 100,000 g/mol, for example about 15,000 to 80,000 g/mol and in particular 20,000 to 70,000 g/mol. The degree of polymerisation is about 50 to 750, preferably about 100 to 250.

The amount of dispersing agent varies, but it is generally about 0.01 to 10 parts per hundred (pph), preferably between 0.2 and 8 pph, in particular 1 and 7 pph parts per 100 parts of dry pigment.

The latex polymer used in the invention can, basically, be of any conventional kind. Thus, soft latex polymers, such as styrene-butadiene (SB), styrene-butyl acrylate (SBA) and polyvinyl acetate (PVAc) can be used. According to the invention, for example a latex polymer of any of the above types, or mixtures thereof, is used as a base latex to which the dispersion agent is bonded. The latex comprises (polymer) particles having an average particle size of about 80 to 150 nm, preferably about 110 to 120 nm.

As will be discussed below, the binder can also be mixed with conventional unmodified binders.

Latex dosage lies between 2 and 9 parts per hundred (pph), preferably between 4 and 7 pph, in particular 5 and 6 pph. The dosage refers to 100 parts of pigment.

According to one typical embodiment, the modified latex is prepared by radical emulsion polymerisation: suitable monomers (i.e. monomers corresponding to the latex and the dispersion agent), water, one or more stabilizing emulsifiers, functional additives to control the reaction (modifiers, seed particles etc.) and a water soluble polymerisation initiator are brought into the reactor with heat flow and pressure control. The system is heated to decompose the initiator and as the radical chain reaction starts the temperature is well controlled by heat exchange, agitation and feed of additional monomers. Examples of common radical initiator are sodium and potassium persulphate although but many others of the above indicated kind can be used as well. At the end of the reaction all monomers are consumed and additional radicals can be introduced to terminate the reaction. The reaction product is then treated to eliminate residual monomers (stripping) or by-products, filtered to free the product of coagulum and adjusted to meet the product specification with regard to, for example, solids content and pH.

Grafting of the latex can also be carried out as disclosed in WO 96/19512. In that document, a water-soluble organic oligomer is grafted to an organic polymer in aqueous latex form by first forming a water-based mixture is formed of a water-soluble oligomer, an aqueous latex of a polymer and at least one free radical polymerisable monomer. The oligomer and the polymer are preformed, and the monomer is free radical polymerised in order to effect grafting between the oligomer and the polymer. The content of WO 96/19512 is herewith incorporated by reference.

When starting from monomers or when employing a method of the kind discussed above, involving the use of monomers, it is preferred to carry out the grafting reaction in such a way that the residual monomer concentration is small after grafting.

The present invention can be applied to any conventional inorganic pigments, in particular pigments having good light scattering properties. Examples of pigments that frequently are used in coating colours include precipitated calcium carbonate, ground calcium carbonate, calcium sulphate, aluminium silicate, kaolin (hydrous aluminium silicate), aluminium hydroxide, magnesium silicate, talc (hydrous magnesium silicate), titanium dioxide and barium sulphate, and mixtures thereof. Of the pigments mentioned above, the main pigments are kaolin, calcium carbonate, precipitated calcium carbonate and gypsum, which in general constitute over 50 % of the dry solids in the coating mix. Calcined kaolin, titanium dioxide, satin white, aluminium hydroxide, sodium silico-aluminate and plastics pigments are additional pigments, and their amounts are in general less than 25% of the dry solids in the mix. Special pigments include special-quality kaolins and calcium carbonates, as well as barium sulphate and zinc oxide.

In paint applications, titanium oxide, calcium carbonate and satin white are conventional.

Preferred inorganic particles for the purposes of the present invention are selected from the group of precipitated calcium carbonate, ground calcium carbonate, kaolin, titanium dioxide and gypsum. These are contacted with the modified latex polymer to form a latex-pigment hybrid.

Naturally, compositions formulated as coating colours or paints may contain also other pigment, i.e. unmodified pigments of the above kind, and synthetic pigments.

The inorganic pigment is added in an amount sufficient to obtain a total solid content of the dispersion of 10 to 90 % by weight. Typically, the amount of pigment is 20 to 500 %, in particular 75 to 250 %, by weight of the aqueous phase.

The dispersions according to the invention are characterized as being "stable" which means that there is only minor precipitation during a 6-month storage. Typically, the amount of solid matter settling out from the dispersion is less than 5 % by weight of the solid matter, preferably less than 1 % and in particular less than 0.5 %.

For producing the novel dispersions the aqueous dispersion of the latex polymer is admixed with an anionic dispersing agent having a charge density of at least 14.1 meq/g to form a modified latex.

The dispersing agent can first be contacted with a radical initiator of the above indicated kind to produce radical functions along the polymer backbone of the dispersant molecule. During contacting the dispersing agent will become graft polymerized onto the latex polymer particles. It is also possible to introduce the radical initiator into the aqueous latex dispersion before the dispersing agent is added.

Once the dispersing agent has reacted with the polymer particles to form a modified latex inorganic, undispersed pigment particles are introduced into the aqueous phase to form a pigment-latex slurry. The latex polymer particles having a surface at least partially covered with dispersant molecules will disperse the pigment particles efficiently while bonding to them. As a result, a slurry with evenly divided solids is obtained and this pigment-latex slurry is then subjected to intensive mixing to form a stable dispersion.

Figure 1 gives a schematic depiction of a modified latex particle of the above-discussed kind. The drawing indicates anionic dispersing agents attached on the surface of the generally spherical latex particles. The group "R" stands for the continuum of drawn polymer, whereas the anionic groups have provided for the attachment of the dispersant molecule to the latex particle. As shown in the drawing, in practice, there are typically some other chemical species present on surface of latex particle, e.g. surface-active agents and carboxyl groups. It should be noted that the drawing is merely presented for illustrative purposes and it has not been drawn to scale.

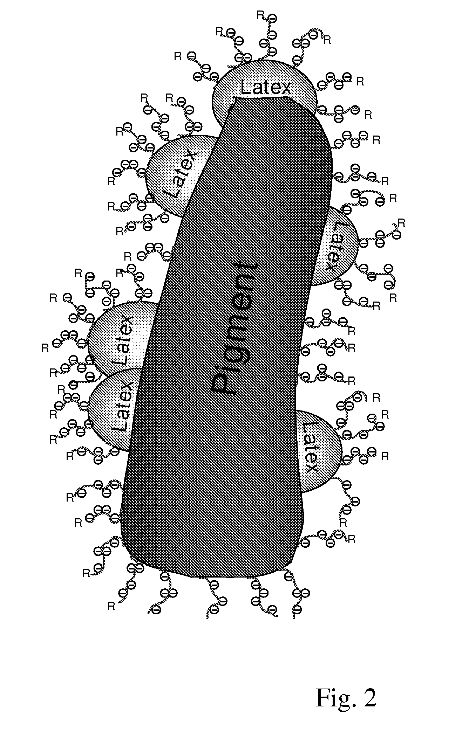

Figure 2 is a similar schematic illustration of a latex-pigment composite, where the surface of the pigment is occupied by modified latex and dispersing agent.

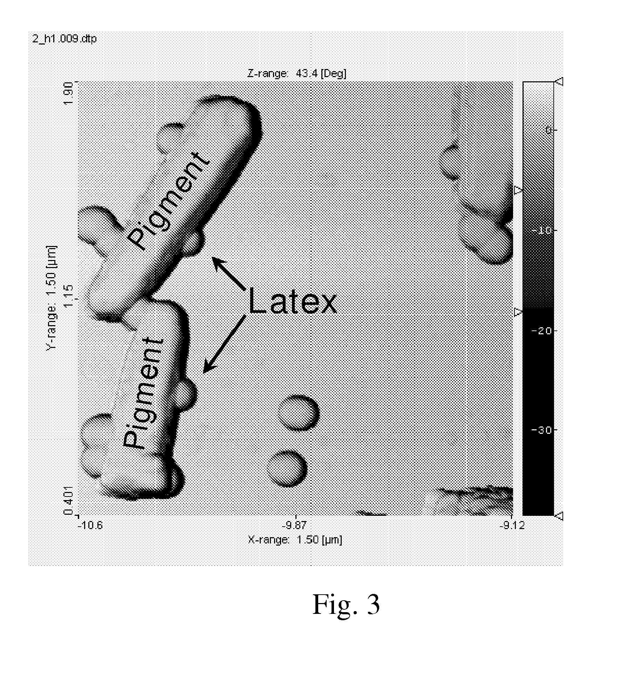

Figure 3 shows an atomic force microscope phase image (tapping mode 1.5 x 1.5 um) of latex-pigment composite (Latex 2B), which has been freeze-dried over a glass plate. As can be seen, the two depictions (Fig. 2 and Fig. 3) are largely similar.

The present invention also provides a method of producing the novel stable aqueous dispersions, comprising a latex polymer, an inorganic pigment and a dispersing agent, wherein
- the latex polymer is contacted with an anionic dispersing agent having a high charge density in an aqueous medium to form a modified latex dispersion,
- the inorganic pigments are added to the modified latex dispersion in aqueous phase to form a pigment-latex slurry, and
- the pigment-latex slurry is subjected to intensive mixing to form a dispersion.

It is preferred to add the inorganic material into the latex dispersion, as discussed above, rather than mixing the latex into an aqueous slurry of particles to which dispersing agent has been added. Deviations from the above order may cause agglomeration or weak latex adsorption.

The dispersing agent is preferably one of the kind discussed above in more detail.

According to one practical embodiment, all modified latex (i.e. the aqueous dispersion of latex polymer) is first placed in a container and undispersed pigment is added into the latex progressively to prevent flocculation.

The rate of adsorption of latex on the inorganic particle is at least 50 %, preferably 60 % or more, in particular 70 % or higher, suitably 80 % or over, and advantageously about 90 % or higher for achieving good surface strength development. The percentages refer to the total amount of latex polymer present in the aqueous system.

The dispersing agent can be added in one or several portions during the mixing of the components. According to one embodiment, about 5 to 70 %, preferably about 20 to 60 %, of the total amount of dispersing agent is added after the addition of the pigment.

After all or practically all the pigment has been added, optionally an additional portion of a dispersing agent can be added to the pigment-latex slurry. The dispersing agent in this stage can be the same as in the earlier stage. Preferably, a dispersing agent having a lower net charge is, however, separately added to avoid desorption of modified latex from the surface of the pigment. Thus, this embodiment comprises dividing the total amount of the dispersing agent into at least two portions, a first portion of which is mixed and contacted with and grafted onto the latex to form a modified latex, a second portion being mixed with the aqueous slurry after the addition of the modified latex. The first portion of the dispersing agent comprises about 10 to 95 wt-%, preferably about 20 to 90 wt-%, in particular about 40 to 90 wt-%, of the total amount of the dispersing agent. This embodiment is particularly suitable to low latex dosages (lower than about 8 pph) whereby flowability of the slurry can be ensured by adding pure dispersant. On the other hand, it is not preferred to add pure dispersant simultaneously with the pigment, because this will lower latex adsorption on the pigment.

The temperature is maintained at less than 95 °C during the preparation of the dispersion, preferably the temperature is ambient or elevated, such as 25 to 90 °C, in particular about 28 to 85 °C. In general temperatures in excess of about 40 °C are preferred.

The pH of the dispersion is adjusted to 7.5 to 10.0, preferably 8.0 to 9.5. If needed, an alkaline agent, such as alkali metal hydroxide or carbonate or ammonia can be used for adjusting the pH. Typically an alkaline pH is preferred for carbonate based pigments.

The pH during dispersion is generally about 9.0 to 9.5. It has been found that a pH rise during dispersion gives rise to dissociation of the carboxyl acid groups with an increase of the charge of the system and adsorption.

The final dispersing demands intensive agitation.

The novel dispersions can be used as coating colours for coating of paper or cardboard. Basically, the dispersions can be used as such. However, the properties of the dispersions can be adjusted by incorporating various conventional additives and auxiliary agents. Such agents are, in addition to the dispersants discussed above, agents affecting the viscosity and water retention of the mix (e.g. CMC, hydroxyethyl cellulose, polyacrylates, HASEs, alginates, benzoate), so-called lubricants, hardeners used for improving water-resistance, optical auxiliary agents, anti-foaming agents, pH control agents, and preservatives. Examples of lubricants include sulphonated oils, esters, amines, calcium or ammonium stearates; of agents improving water resistance, glyoxal; of optical auxiliary agents, diaminostilbene disulphonic acid derivatives; of anti-foamers, phosphate esters, silicones, alcohols, ethers, vegetable oils; of pH control agents, e.g. sodium hydroxide, ammonia; and finally of preservatives, formaldehyde, phenol, quaternary ammonium salts. The concentration of these additives and auxiliary agents range from about 0.001 to 5 parts, in particular about 0.01 to 2, preferably about 0.05 to 1.5 parts, per hundred parts of dry pigment.

It should be noted that in the actual coating colour applications, the above mentioned polymeric latex binder can be used together with other binders, for example, water-soluble polymers, starch, CMC, hydroxyethyl cellulose and polyvinyl alcohol. Combinations with starch and various starch derivatives are particularly preferred. Starch can be applied in a proportion of 10 to 90 weight % of the total amount of binder. It is also possible to modify the starch with the dispersing agent, as described above, before application.

Another interesting field of application is within the paint industry. The overall compositions of the present invention when used in paint applications can vary widely. The paint can include a colorant in addition to the pigment. Illustrative of useful pigments are metal oxides, such as titanium oxide, zinc oxide, lead oxide, iron oxide and the like; and metal sulphides such as zinc sulphide, cadmium sulphide and the like. In addition to the pigment, binder, and liquid, which can be solvent or water, a paint also may contain many optional additives, such as defoamers, extenders, thickeners, flow agents, drying agents, catalysts, preservatives, wetting agents, barrier enhancers such as clay and mica, and surfactants, viscosity modifiers and plasticizers to improve various properties of the paint. These optional additives are well known in the art and will not be described herein in any great detail. The selection of the pigments, binder, and additives depends, of course, upon the properties desired in the paint to be made.

The following examples illustrate the invention:

### Example 1 (comparative)

### Dispersing inorganic pigment with a blend of dispersing agent and latex

First, 3,822 g undispersed PCC pigment (Opacarb A40, supplied by Special Minerals Inc, Äänekoski, Finland) was weighed. The pigment was supplied in the form of a wet filter cake having a solid content of 68.4 %, and the weighed amount therefore equalled 2,614 g dry pigment. Then, 7 parts of Litex PX 9292 (an SB-latex supplied by Eka Polymer Latex, Oulu, Finland) and 0.5 parts of K5 (a acrylate/maleic acid copolymer type dispersing agent supplied by Kemira Oyj, Vaasa, Finland) was weighed against 100 parts of dry pigment.

The weighed amount of the latex and the dispersing agent was 366 g wet Litex 9292 having a solids content of 50.0 % and 31.1 g wet K5 having a solid content of 42.1 %. The Litex PX 9292 and dispersing agent K5 were blended together in a L4RT Silverson laboratory mixer equipped with a screen hole mixing head. The mixing time was 30 min at a mixing rate of 8,800 rpm. During the mixing the temperature was raised to 50 °C.

The latex/dispersing agent blend was placed in 10 L round-bottom stainless steel container. Addition of Opacarb A40 into the container was initiated progressively by mixing the latex/dispersing agent blend with a Diaf FFB H3 dissolver (at 36 m/s radial velocity). The slurry maintained during the whole addition its ability to flow. After adding all inorganic pigment the pH of the slurry was adjusted to 9.0 with 0.5 M HCl.

The slurry was then additionally mixed by using a L4RT Silverson laboratory mixer equipped with a screen hole mixing head. The mixing time was 15 min, the mixing rate 8,800 rpm and the temperature was maintained at 60 °C or below. The solid content of the slurry was 66 wt-% after this stage.

The slurry was centrifuged with a Sorvall Instruments RC5C centrifuge equipped with an SS-34 rotor for 40 min at 26,500 G and 25 °C. The latex content of liquid phase was then analyzed with a Shimadzu TOC-V CPH Total Organic Carbon (TOC) analyzer - the samples were diluted at a ratio of 1 to 250 and 1 to 500, respectively. The total organic carbon (TOC) concentration of 7 parts of Litex PX 9292 and 0.5 parts of K5, when totally in water, is theoretically 95.3 g/l. The measured TOC level for the liquid phase of the above slurry was 74.0 g/l. The difference (21.3 g/l) was assumed to have been adsorbed onto the pigment. It constituted an about 22 % adsorption rate of the Litex 9292 - K5 - blend onto the inorganic PCC pigment.

### Example 2

### Dispersing inorganic pigment using a latex grafted with dispersing agent K5

First, 3,521 g wet, undispersed PCC pigment (Opacarb A40, supplied by Special Minerals Inc, Äänekoski, Finland) was weighed. The pigment was supplied in the form of a wet filter cake having a solid content of 71.6 %, and the weighed amount therefore equalled 2,521 g dry pigment. Then, 7 parts of a modified latex (Latex 2B) was weighed against the dry pigment. Latex 2B comprised an SB latex of the above-mentioned type (Litex PX 9292), which had been modified by grafting 5 parts of dispersing agent K5 onto the SB latex polymer. The weighed amount of the modified latex was 438 g wet Latex 2B, having a solids content of 40.3 %.

All of the modified latex Latex 2B blend was placed in a 10 L round bottom stainless steel container. Addition of Opacarb A40 into the container was initiated progressively by mixing the Latex 2B with a Diaf FFB H3 dissolver (at 36 m/s radial velocity). After an addition of about 80 % of the wet undispersed filter cake (about 2,800 g), the slurry turned very thick (toothpaste like). Dispersing agent K5 was separately added in an amount of 0.3 parts (per 100 parts of dry pigment, which amounts to 18.0 g wet dispersing agent with a solid content of 42.1 %) to restore the flowability of the slurry.

The rest of the undispersed pigment, about 700 g wet filter cake, was then added into the container. The slurry remained flowable in spite of this addition. The pH of the slurry was 8.9 without adjustment. Finally, 0.2 parts of dispersing agent K5 was added (12.0 g wet, solid content 42.1 %) to further improve the rheological performance of the slurry and to improve its stability.

The pigment-latex slurry was then dispersed using a L4RT Silverson laboratory mixer equipped with a screen hole mixing head. The mixing time was 15 min, the mixing rate 8,800 rpm and the temperature was maintained at 60 °C or below. The solid content of the slurry was 66 wt-% after this stage.

The slurry was centrifuged with a Sorvall Instruments RC5C centrifuge equipped with an SS-34 rotor for 40 min at 26,500 G and 25 °C. The latex content of liquid phase was then analyzed with a Shimadzu TOC-V CPH Total Organic Carbon (TOC) analyzer - the samples were diluted at a ratio of 1 to 250 and 1 to 500, respectively. Analysis against the calibration curve of Latex 2B revealed that about 93 % of the latex was adsorbed to the pigment.

### Example 3

### Preparing coating colors and applying them on the precoated base with a laboratory coater

### Preparing reference (Litex PX9292) coating colors

Two (2) reference coating colors were prepared. They contained 7 and 9 parts of Litex PX 9292 and where therefore named 7-Litex and 9-Litex, respectively.

In the case of 7-Litex coating color, 6,974 g dispersed PCC slurry (Opacarb A40, supplied by Special Minerals Inc, Äänekoski, Finland) was weighed. The solid content of this slurry was 71.7 % and the weighed amount therefore equaled 5,000 g dry pigment. Then, 0.8 parts Finnfix 10 (carboxymethyl cellulose supplied by CP Kelco, Äänekoski, Finland) and 7 parts of Litex PX 9292 were weighed against 100 parts of dry pigment. The weighed amount of the CMC and the latex was 382.8 g wet Finnfix 10 having a solids content of 10.5 % and 700 g wet Litex PX 9292 having a solid content of 50.0 %. The Finnfix 10 and Litex PX 9292 were added into an Opacarb A40 slurry by mixing the color with a Diaf FFB H3 dissolver (at a radial velocity of 26 m/s). After adding all components the pH of the color was adjusted to 9.0 with 0.5 M NaOH.

### Preparing latex-pigment composite coating colors

Two (2) latex-pigment composite coating colors were prepared. They contained 7 and 9 parts of Latex 2B (a modified latex grafted with dispersing agent K5), which was first used to disperse undispersed PCC pigment (Opacarb A40) as it has been described in the Example 2. The colors were named 7-2B and 9-2B, respectively.

In the case of the 7-2B coating color 7,461 g latex-pigment composite was weighed. The solid content of composite was 66.1 % and the weighed amount therefore equaled 4,930 g dry pigment. Then 0.8 parts Finnfix 10 was weighed against 100 parts of dry latex-pigment composite. The weighed amount of the wet CMC was 393.5 g having a solids content of 10.0 %. The Finnfix 10 was added into the latex-pigment composite by mixing the color with a Diaf FFB H3 dissolver (at a radial velocity of 26 m/s). After mixing the components the pH of the color was 8.9 and therefore no pH adjustment was needed.

### Applying coating colors on precoated base paper by laboratory coater

Coating colors were applied on a base paper by a Heli-Coater 2000 laboratory coater (T.H. Dixon & Co. Ltd, Letchworth, England). The coatings were carried out with a short dwell coating head and at a coating speed of 1,000 m/min. The blade beam angle was 50° and blade thickness 0.457 mm. Drying was carried out in the following sequence: 15 s IR-dryer, 15 s hot air and 15 s cold air. The target coat weight was 11.0 ± 1.0 g/m² and it was controlled by adjusting the blade load. The base paper employed was precoated Galerie Art Gloss 92 g/m² (M-real, Äänekoski Paper mill, Äänekoski, Finland).

Coated samples were calendered with a DT Laboratory Calender (DT Paper Science, Turku, Finland). The calendering temperature was 90 C and nip load 60 kN/m. The coated surface abutted against the steel roll of the one nip used. The calendering speed was 8 m/min.

### Characterizing the laboratory coated samples

Coated samples were characterized at the Laboratory of Central Finland (M-real, Äänekoski, Finland). The results are shown in Table I. Determination of resistance to picking - accelerating speed method using the IGT tester was done according to SCAN-P 63:90. Opacity was measured according to ISO 2471:1998. The determination of ISO brightness followed ISO 2470:1999 standard. Set-off laboratory printing tests were done by IGT tester according to SCAN-P 86:02.

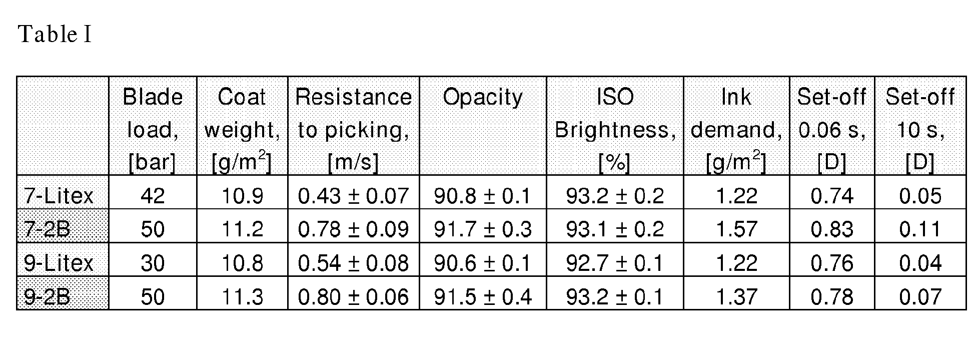

The results show that latex-pigment composite increases surface strength compared to traditional latex system. This enables the decrease of total latex amount in composite coating colors without jeopardizing the runnability and quality on printing press. In addition, composite improves opacity.

## Claims

1. A stable aqueous dispersion, comprising a latex, an inorganic pigment and a dispersing agent dispersed in water, wherein
- at least 50 wt-% of the latex is adsorbed onto the inorganic particles and
- at least 20 wt-% of the dispersing agent is adsorbed onto the latex, said dispersing agent comprising an anionic polymer.

2. The dispersion according to claim 1, wherein at least 70 wt-%, preferably at least 80 wt-%, of the latex is adsorbed onto the inorganic particles and at least 25 %, preferably at least 30 wt-%, of the dispersing agent is adsorbed onto the latex.

3. The dispersion according to claim 1 or 2, comprising about 1 to 25 parts by weight, preferably about 2 to 20 parts by weight, of latex and dispersing agent per 100 parts by weight of pigment.

4. The dispersion according to any of the preceding claims, wherein the dispersing agent comprises an anionic dispersing agent based on acrylic acid monomers and having a charge density of at least 14.1 meq/g, preferably at least 15.8 meq/g, in fully dissociated state.

5. The dispersion according to claim 4, wherein the dispersing agent is a polymeric compound having acid groups derived from acrylic acid and maleic acid.

6. The dispersion according to claim 5, wherein the dispersing agent is sodium polyacrylate.

7. The dispersion according to any of claims 1 to 6, wherein the dispersing agent comprises an anionic dispersing agent based on monomers containing at least one acid group selected from carboxylic acid and sulphonic acid groups, said monomers forming a (co)polymer having on an average more than one acid group per monomeric unit.

8. The dispersion according to any of claims 1 to 7, wherein the dispersing agent comprises uncharged side chain grafts for increasing the affinity of the dispersing agent towards the latex.

9. The dispersion according to any of the preceding claims, wherein the latex comprises a base latex to which the dispersion agent is bonded.

10. The dispersion according to claim 9, wherein the base latex comprises an S/B, S/A or PVAc latex.

11. The dispersion according to any of the preceding claims, wherein the pH of the dispersion is about 7.5 to 9.5.

12. The dispersion according to any of claims 1 to 11, wherein the latex comprises particles having an average particle size of about 80 to 150 nm, preferably about 110 to 120 nm.

13. The dispersion according to any of claims 1 to 12, wherein the inorganic particles are selected from the group of precipitated calcium carbonate, ground calcium carbonate, kaolin, titanium dioxide and gypsum.

14. A method of producing a stable aqueous dispersion of a latex, an inorganic pigment and a dispersing agent, wherein
- the latex is contacted with an anionic dispersing agent to form a modified latex and
- the modified latex is admixed with the inorganic pigment in aqueous phase to form a pigment-latex slurry, and
- subjecting the pigment-latex slurry to intensive mixing to form a dispersion.

15. The method according to claim 14, wherein the anoionic dispersing agent has a charge density of at least 14.1 meq/g, based on a polymeric structure in fully dissociated state formed by acrylic acid monomers optionally copolymerized or grafted with monomers having at least two acid groups.

16. The method according to claim 14 or 15, comprising mixing the inorganic pigment into an aqueous solution of the modified latex to form a pigment-latex slurry, and dispersing the pigment-latex slurry.

17. The method according to any of claims 14 to 16, comprising gradually feeding the inorganic pigment into the aqueous latex solution.

18. The method according to any of claims 14 to 17, comprising separately adding a portion of a dispersing agent to the pigment-latex slurry.

19. The method according to claim 18, wherein a first portion of one dispersing agent is contacted with the latex to form a modified latex, and a second portion of a second dispersing agent is mixed with the aqueous slurry after the addition of the modified latex.

20. The method according to claim 19, wherein the first portion of the dispersing agent comprises about 10 to 95 wt-%, preferably about 20 to 90 wt-%, in particular about 40 to 90 wt-%, of the total amount of the dispersing agent.

21. The method according to claim 18 or 19, wherein the first and the second dispersing agents are different.

22. The method according to any of claims 14 to 21, wherein the dispersing agent is a polymeric compound having acid groups derived from acrylic acid and maleic acid.

23. The method according to any of claims 14 to 22, wherein the dispersing agent is sodium polyacrylate based.

24. The method according to any of claims 14 to 23, wherein the dispersing agent has a charge density of at least 14.5 meq/g, preferably at least 15.8 meq/g.

25. The method according to any of claim 14 to 24, wherein the dispersing agent comprises uncharged side chain grafts for increasing the affinity of the dispersing agent towards the latex.

26. The method according to any of claims 14 to 24, wherein the temperature is maintained below 85 °C during the preparation of the dispersion.

27. The method according to any of claims 14 to 26, wherein the pH of the dispersion is adjusted to 7.5 to 9.5.

28. The method according to any of claims 14 to 27, wherein the inorganic particles are selected from the group of precipitated calcium carbonate, ground calcium carbonate, kaolin, titanium dioxide and gypsum.

29. The method according to any of claims 14 to 28, wherein the latex has particles with an average size of about 80 to 150 nm.

30. The use of a dispersion according to any of claims 1 to 13 as a coating colour for coating of paper or cardboard.

31. The use of a dispersion according to any of claims 1 to 13 as a paint composition.
